# FASCICULE DE BREVET EUROPEEN

(11) **EP 1 858 758 B1**
(45) Date de publication et mention de la délivrance du brevet: **10.08.2011**
(21) Numéro de dépôt: 06725070.4
(22) Date de dépôt: 15.03.2006
(51) Int. Cl.: B64D 27/26

(54) **ATTACHE MOTEUR D'UN SYSTEME DE MONTAGE INTERPOSE ENTRE UN MAT D'ACCROCHAGE ET UN MOTEUR D'AERONEF**
MOTORBEFESTIGUNG EINES ZWISCHEN EINER BEFESTIGUNGSSTREBE UND EINEM FLUGZEUGTRIEBWERK ANGEBRACHTEN MONTAGESYSTEMS
ENGINE FASTENER OF A MOUNTING SYSTEM INTERPOSED BETWEEN AN ATTACHMENT STRUT AND AN AIRCRAFT ENGINE

(30) Priorité: 18.03.2005 FR 0550700
(43) Date de publication de la demande: 28.11.2007
(73) Titulaire: AIRBUS OPERATIONS, 31060 Toulouse (FR)
(72) Inventeur: BEAUFORT, Jacques, F-31700 Blagnac (FR); DUMONT, Jean-François, F-31530 Thil (FR)
(74) Mandataire: Poulin, Gérard
(86) Numéro de dépôt international: PCT/EP2006/060745
(87) Numéro de publication internationale: WO 2006/097484

(56) Documents cités:
- EP-A- 0 997 653
- EP-A- 1 486 418
- US-A- 5 474 258
- US-A- 5 871 176

## Description

### DOMAINE TECHNIQUE

La présente invention se rapporte de façon générale à une attache moteur d'un système de montage destiné à être interposé entre une structure rigide d'un mât d'accrochage de moteur d'aéronef et un moteur, et plus particulièrement mais non exclusivement à une attache avant destinée à reprendre les efforts s'exerçant selon les directions longitudinale, transversale et verticale du moteur.

L'invention se rapporte également à un système de montage destiné à être interposé entre une structure rigide d'un mât d'accrochage de moteur d'aéronef et un moteur, ce système étant applicable quelle que soit la position du moteur par rapport à celle du mât d'accrochage.

### ÉTAT DE LA TECHNIQUE ANTÉRIEURE

Un mât d'accrochage d'un aéronef est prévu pour constituer l'interface de liaison entre un moteur et une voilure de l'aéronef. Il permet de transmettre à la structure de cet aéronef les efforts générés par son moteur associé, et autorise également le cheminement du carburant, de l'électricité, de l'hydraulique et de l'air entre le moteur et l'aéronef.

Afin d'assurer la transmission des efforts, le mât comporte une structure rigide, par exemple du type « caisson », c'est-à-dire formée par l'assemblage de longerons supérieurs et inférieurs raccordés entre eux par l'intermédiaire de nervures transversales.

Typiquement, un système de montage est interposé entre le moteur et la structure rigide du mât, et comporte globalement au moins deux attaches, généralement une attache avant et une attache arrière.

Par ailleurs, ce système de montage comprend un dispositif de reprise des efforts de poussée générés par le moteur, ce dispositif pouvant par exemple être intégré à l'attache avant. Dans l'art antérieur, ce dispositif prend habituellement la forme de deux bielles latérales raccordées d'une part à une partie avant du carter central du moteur, et d'autre part à un corps principal de l'attache avant.

Une attache moteur de l'art antérieur est connue de EP- 1486418, qui montre toutes les caractéristiques du préambule de la revendication 1.

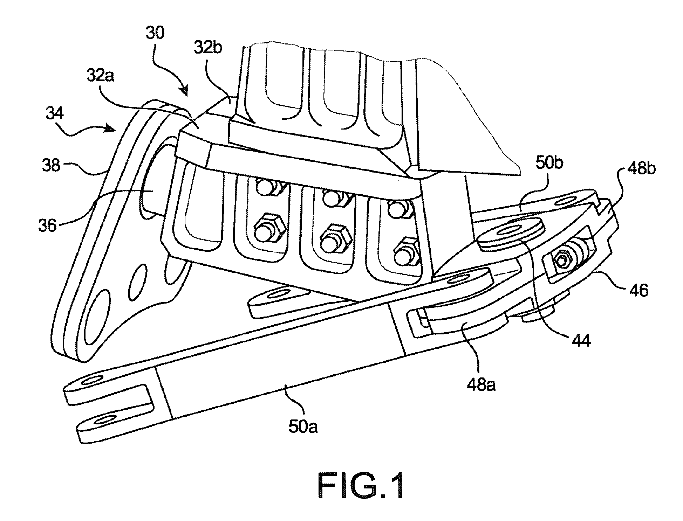

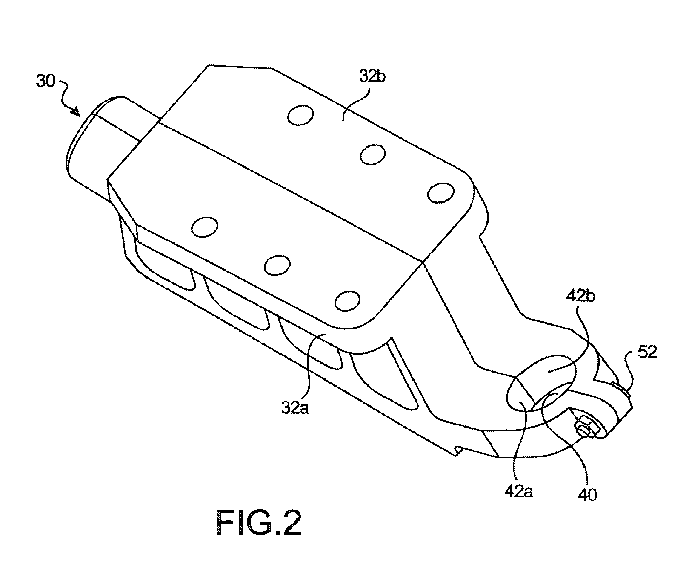

En référence aux figures 1 et 2, on peut apercevoir une autre attache moteur avant connue de l'art antérieur, cette attache avant étant conçue de manière à reprendre les efforts s'exerçant selon les directions longitudinale, transversale et verticale du moteur.

Plus précisément, cette attache avant comporte un corps central 30 destiné à être monté fixement au niveau d'une partie avant de la structure rigide d'un mât d'accrochage, ce corps central 30 étant constitué par deux ferrures principales superposées 32a, 32b selon une direction transversale de l'attache. Le dédoublement des ferrures est opéré pour des raisons de sécurité, de sorte qu'en cas de rupture de l'une de ces deux ferrures principales, l'autre puisse assurer le passage des efforts durant une durée déterminée.

A l'avant du corps principal 30, se trouve un agencement 34 conçu pour assurer simultanément la reprise des efforts selon les directions transversale et verticale du moteur, cet agencement habituellement dénommé « Monoball » comprenant un axe d'articulation 36 solidaire du corps principal 30, ainsi qu'une ferrure triangulaire double 38 articulée sur cet axe 36 orienté selon la direction longitudinale de l'attache.

Comme on peut le voir sur la figure 2, le corps principal 30 présente, dans une partie arrière d'épaisseur largement rétrécie, un palier 40 destiné à recevoir un axe d'articulation assurant la liaison entre le corps 30 et un palonnier du dispositif de reprise de poussée. A ce titre, il est noté que le palier est défini conjointement par une surface semi-cylindrique 42a de la ferrure principale 32a, ainsi que par une surface semi-cylindrique 42b de la ferrure principale 32b.

Sur la figure 1, on peut en effet apercevoir qu'un axe d'articulation 44 permet d'articuler le palonnier 46 sur le corps principal 30, ce palonnier 46, comportant essentiellement une ferrure double, disposant de deux extrémités latérales 48a, 48b sur lesquelles sont respectivement montées les extrémités arrière de deux bielles de reprise des efforts de poussée 50a, 50b générés par le moteur.

Cette attache moteur connue de l'art antérieur présente tout d'abord l'inconvénient que les parties arrière des ferrures principales doivent nécessairement être solidarisées l'une à l'autre en aval du palier formé par celles-ci, afin de garantir la géométrie de ce palier. Cette fixation, par exemple réalisée à l'aide d'un boulon, est d'une part contraignante en ce sens qu'elle s'ajoute aux fixations déjà requises pour assurer le maintien mécanique entre les deux ferrures principales, et d'autre part néfaste du fait qu'elle n'intègre pas de dédoublement pourtant requis pour assurer la sécurité évoquée ci-dessus.

En d'autres termes, en cas de rupture du boulon 52 montré sur la figure 2, aucun moyen de l'attache avant ne permet de garantir la géométrie du palier 40 et le maintien de l'axe d'articulation 44 au sein de ce dernier, dans la mesure où les deux parties arrière des ferrures 32a, 32b peuvent alors s'écarter librement l'une de l'autre.

En outre, la nécessité de prévoir cette partie arrière exclusivement pour la réception de l'axe d'articulation implique bien évidemment que la masse globale et l'encombrement du corps principal ne sont pas entièrement optimisés. De plus, la position très reculée du palier de réception de l'axe d'articulation requiert la présence de deux bielles de longueur importante, également néfaste en termes d'encombrement et de masse globale d'une telle attache avant.

Enfin, il est noté que la rupture d'épaisseur entre la partie centrale et la partie arrière du corps d'attache provoque des difficultés de transfert des efforts au sein de l'attache.

### EXPOSÉ DE L'INVENTION

L'invention a donc pour but de proposer une attache moteur d'un système de montage destiné à être interposé entre une structure rigide d'un mât d'accrochage de moteur d'aéronef et un moteur, ainsi qu'un tel système de montage, remédiant au moins partiellement aux inconvénients mentionnés ci-dessus relatifs aux réalisations de l'art antérieur, telle que défini par les caractéristiques de la revendication 1.

Pour ce faire, l'invention a tout d'abord pour objet une attache moteur d'un système de montage destiné à être interposé entre une structure rigide d'un mât d'accrochage de moteur d'aéronef et un moteur, cette attache comprenant un corps principal, un palonnier monté de manière articulée sur le corps principal par l'intermédiaire d'un premier axe d'articulation, ainsi que deux bielles de reprise des efforts de poussée disposant chacune d'une extrémité arrière raccordée sur le palonnier, le corps principal étant réalisé par l'intermédiaire d'une première ferrure principale et d'une seconde ferrure principale superposée à la première. Selon l'invention, le premier axe d'articulation est constitué par une première portion d'axe et une seconde portion d'axe, la première portion d'axe étant réalisée d'un seul tenant avec la première ferrure principale, et la seconde portion d'axe étant réalisée d'un seul tenant avec la seconde ferrure principale. De plus, les première et seconde ferrures principales définissent conjointement une surface de butée capable de limiter la rotation du palonnier autour du premier axe d'articulation.

Par conséquent, l'invention proposée permet d'obtenir une attache moteur dont le corps principal ne requiert plus la présence d'un palier en partie arrière comme cela était rencontré dans les réalisations de l'art antérieur, étant donné que l'axe d'articulation du palonnier est directement intégré sur ce corps principal. Ainsi, c'est la totalité de la partie arrière d'épaisseur rétrécie du corps principal qui peut être supprimée, ce qui se traduit naturellement par une diminution avantageuse de la masse globale et de l'encombrement de ce corps.

Par ailleurs, le fait de supprimer la partie arrière d'épaisseur rétrécie permet d'avancer la position de l'axe d'articulation par rapport à celle rencontrée antérieurement. Ainsi, la longueur des bielles de reprise des efforts de poussée peut donc également être diminuée, ce qui conduit avantageusement à un gain en termes de masse globale et d'encombrement de l'attache moteur.

D'autre part, la conception du corps principal proposée par l'invention résout le problème de sécurité observé avec le boulon prévu dans les réalisations de l'art antérieur dans le but de garantir la géométrie du palier de l'axe d'articulation. En effet, le fait de prévoir deux portions d'axe constituant conjointement le premier axe d'articulation permet d'obtenir à une telle sécurité, également appelée fonction « Fail Safe ».

Il est précisé que l'absence de rupture importante d'épaisseur dans le corps d'attache permet d'améliorer considérablement le transfert des efforts au sein de l'attache moteur.

Enfin, du fait que les première et seconde ferrures principales définissent conjointement une surface de butée capable de limiter la rotation du palonnier autour du premier axe d'articulation, en cas de rupture de l'une des deux bielles de reprise des efforts de poussée ou d'un axe assurant la liaison entre ces bielles et le palonnier ou le carter du moteur, l'amplitude de rotation de ce palonnier sera avantageusement limitée par la surface de butée prévue à cet effet.

De préférence, les première et seconde portions d'axe constituant le premier axe d'articulation sont chacune de forme semi-cylindrique, et de section semi-circulaire.

Préférentiellement, les première et seconde ferrures principales sont superposées selon une direction transversale de l'attache moteur.

D'autre part, l'attache moteur comporte de préférence en outre un second axe d'articulation orienté selon une direction longitudinale de cette attache moteur.

Dans un tel cas, on peut prévoir que le second axe d'articulation est constitué par une première portion d'axe et une seconde portion d'axe, la première portion d'axe étant réalisée d'un seul tenant avec la première ferrure principale, et la seconde portion d'axe étant réalisée d'un seul tenant avec la seconde ferrure principale.

Ainsi, le second axe d'articulation ainsi formé peut alors coopérer avec une ferrure triangulaire appartenant à l'attache moteur, dans le but de reprendre les efforts s'exerçant selon les directions transversale et verticale du moteur.

De préférence, les première et seconde ferrures principales sont en contact selon une surface de jonction appartenant à un plan de symétrie longitudinal de l'attache moteur.

Préférentiellement, l'attache est destinée à constituer une attache avant du système de montage.

Enfin, comme cela a été évoqué ci-dessus, l'attache moteur est de préférence conçue de manière à pouvoir reprendre les efforts s'exerçant selon une direction parallèle à un axe longitudinal du moteur, selon une direction orientée transversalement par rapport à ce moteur, et selon une direction verticale de ce dernier, ces trois directions étant orthogonales entre-elles.

D'autre part, l'invention a également pour objet un système de montage destiné à être interposé entre une structure rigide d'un mât d'accrochage de moteur d'aéronef et un moteur, ce système comprenant une attache moteur telle que celle décrite ci-dessus, et de préférence une attache moteur avant telle que celle décrite ci-dessus, ainsi qu'une attache moteur arrière.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- les figures 1 et 2, déjà décrites, montrent une attache moteur avant connue de l'art antérieur ;
- la figure 3 représente une vue en perspective d'un système de montage interposé entre un moteur d'aéronef et une structure rigide d'un mât d'accrochage fixé sous une voilure de cet aéronef, selon un mode de réalisation préféré de la présente invention ;
- la figure 3a est une vue schématique en perspective montrant la reprise des efforts assurée par chacune des deux attaches moteur du système de montage montré sur la figure 3 ;
- la figure 4 représente une vue en perspective d'une attache moteur selon un mode de réalisation préféré de la présente invention, cette attache moteur correspondant à l'attache avant du système de montage montré sur la figure 3 ;
- la figure 5 représente une vue en perspective du corps principal de l'attache montrée sur la figure 4 ; et
- la figure 6 représente une vue en perspective de l'une des deux ferrures principales du corps principal montré sur la figure 5.

### EXPOSÉ DÉTAILLÉ DE MODES DE RÉALISATION PRÉFÉRÉS

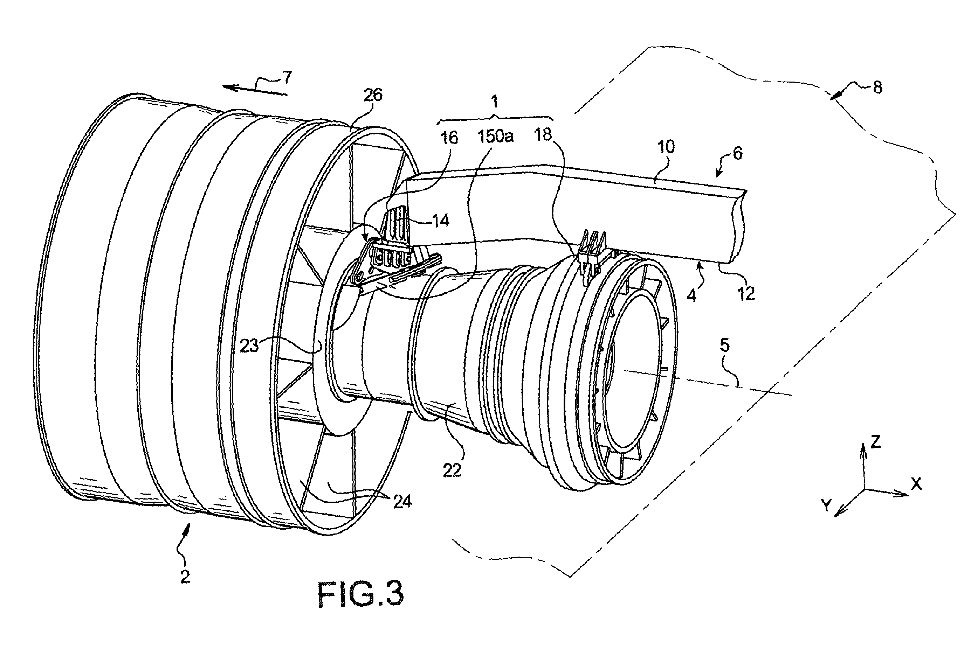

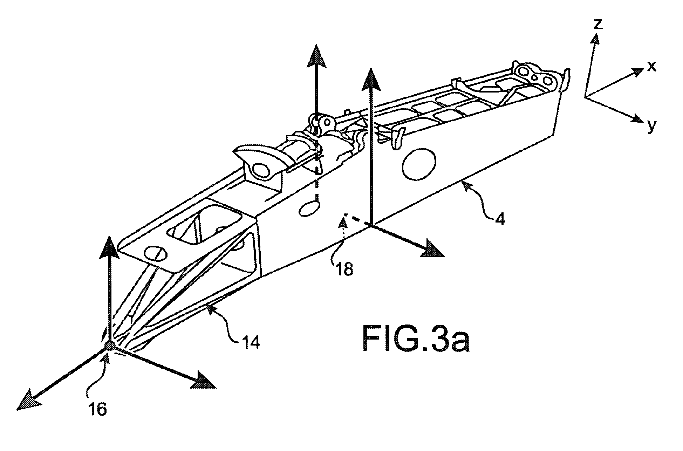

En référence tout d'abord à la figure 3, on voit un système de montage 1 selon un mode de réalisation préféré de la présente invention, ce système de montage 1 étant interposé entre un moteur 2 d'aéronef et une structure rigide 4 d'un mât d'accrochage 6 fixé sous une aile d'aéronef représentée uniquement schématiquement pour des raisons évidentes de clarté, et désignée de façon générale par la référence numérique 8. Il est noté que le système de montage 1 est adapté pour coopérer avec un turboréacteur 2, mais il pourrait bien entendu s'agir d'un système conçu pour suspendre tout autre type de moteur, tel qu'un turbopropulseur, sans sortir du cadre de l'invention. D'autre part, l'application du système de montage 1 n'est pas limitée au cas représenté sur la figure 3 où le moteur 2 est destiné à être suspendu sous la voilure 8 de l'aéronef.

Dans toute la description qui va suivre, par convention, on appelle X la direction longitudinale parallèle à un axe longitudinal 5 du moteur 2, Y la direction orientée transversalement par rapport à ce moteur 2, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs 2, cette direction étant représentée schématiquement par la flèche 7.

Sur la figure 3, on peut voir que seule une portion de la structure rigide 4 du mât d'accrochage 6 a été représentée, accompagnée évidemment du système de montage 1 faisant partie intégrante de ce mât 6.

Les autres éléments constitutifs non-représentés de ce mât 6, tels que les moyens d'accrochage de la structure rigide 4 sous la voilure 8 de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De façon connue, il est indiqué que la structure rigide 4 est globalement réalisée par l'assemblage de longerons inférieurs 12 et supérieurs 10 raccordés entre eux par une pluralité de nervures transversales (non représentées). De plus, une partie avant de cette structure rigide 4 est constituée par une pyramide 14 ou similaire, également connue de l'homme du métier et prenant donc la forme d'une structure partant d'une base et s'étendant vers un sommet en allant vers l'avant et en se rapprochant de l'axe longitudinal 5 du moteur 2.

Dans le mode de réalisation préféré de la présente invention représenté sur la figure 3, le système de montage 1 comporte tout d'abord une attache avant 16 intégrant des bielles de reprise des efforts de poussée 150a, 150b (seule la bielle 150a étant visible sur cette figure 3), également appelées bielles courtes, ainsi qu'une attache arrière 18. A cet égard, il est précisé que l'attache arrière 18 est du type classique et connu de l'homme du métier. Par conséquent, elle sera uniquement décrite succinctement, à titre indicatif et non limitatif.

Cette attache arrière 18 est d'une part solidaire d'une partie arrière du carter central 22, et d'autre part solidaire d'un longeron inférieur 12 de la structure rigide 4 du mât 6. De plus, elle peut être globalement constituée de manilles et de ferrures, et assure la reprise des efforts selon les directions Y et Z, comme le montre schématiquement la figure 3a.

En ce qui concerne l'attache avant 16 qui sera décrite plus en détails ci-après, celle-ci est globalement d'une part solidaire d'une extrémité avant de la pyramide 14 de la structure rigide 4, c'est-à-dire son sommet, et d'autre part solidaire d'une partie avant d'un carter central 22 du moteur 2. Plus précisément, l'attache avant 16 coopère avec une portion 23 du carter central 22 qui porte des pales fixes 24 reliant un carter de soufflante 26 du moteur 2 à ce même carter central 22. En outre, elle est conçue pour assurer, notamment à l'aide des deux bielles de reprise des efforts de poussée 150a, 150b, la reprise des efforts selon les directions X, Y et Z, comme le montre schématiquement la figure 3a.

Ainsi, la reprise du moment s'exerçant selon la direction X est assurée uniquement par l'attache arrière, tandis que la reprise des moments s'exerçant selon les directions Y et Z est assurée conjointement par ces deux attaches moteur 16, 18.

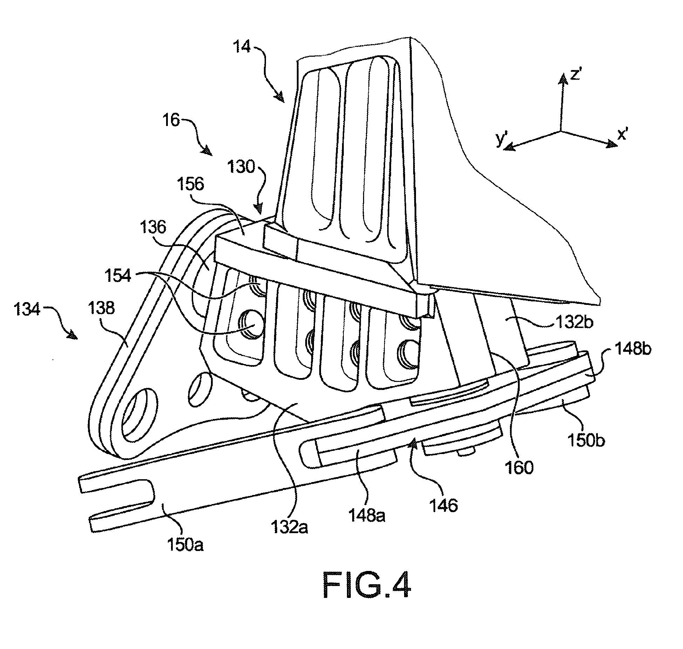

A présent en référence aux figures 4 à 6, il va être décrit de façon détaillée l'attache moteur avant 16 selon un mode de réalisation préféré de la présente invention. Toujours par convention, on appelle X' la direction longitudinale de l'attache 16, Y' la direction transversale de cette dernière, et Z' la direction verticale, ces trois directions étant orthogonales entre-elles. De plus, ces directions X', Y' et Z' peuvent être considérées comme étant identiques aux directions X, Y et Z précitées, respectivement.

L'attache moteur 16 comporte de façon générale un corps principal 130 constitué d'une première ferrure principale 132a et d'une seconde ferrure principale 132b superposée à la première dans la direction Y', les deux ferrures 132a, 132b étant assemblées rigidement l'une à l'autre, par exemple par l'intermédiaire de boulons transversaux (non représentés) traversant des orifices 154 prévus à cet effet.

Les deux ferrures 132a, 132b définissent conjointement une surface supérieure plane 156 orientée selon un plan X'Y', cette surface 156 étant assemblée sous une portion inférieure de la pyramide 14 du mât d'accrochage 4, également à l'aide de boulons verticaux (non représentés) traversant des orifices 158 prévus à cet effet.

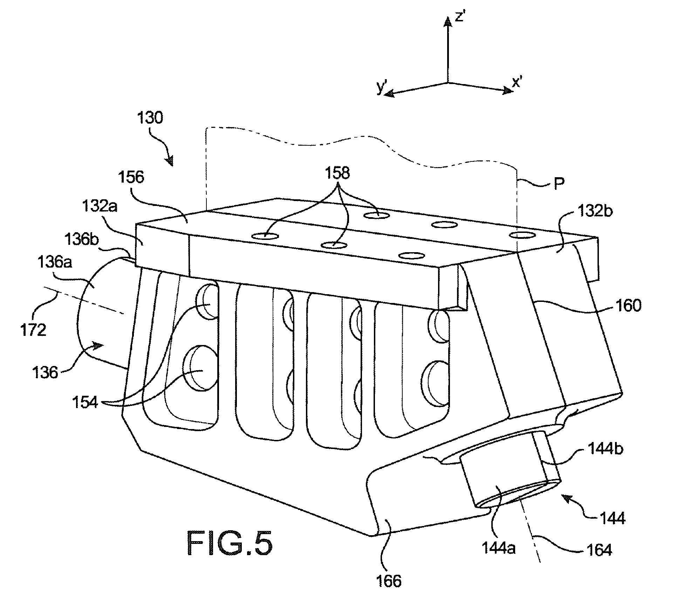

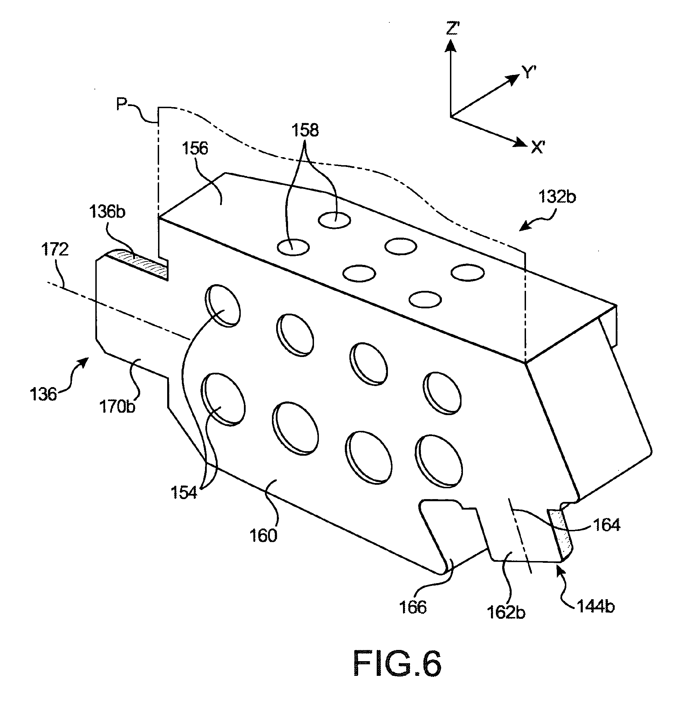

Comme on peut l'apercevoir sur les figures 5 et 6, une surface plane de jonction 160 entre les deux ferrures 132a, 132b s'inscrit dans un plan X'Z' correspondant à un plan de symétrie longitudinal P de l'ensemble de l'attache moteur avant 16, ce plan P étant tel qu'il passe par l'axe 5 du moteur 2.

Cette attache avant 16 comporte les deux bielles de reprise des efforts de poussée 150a, 150b disposées de part et d'autre de l'axe 5 du moteur 2, et comprenant chacune une extrémité avant destinée à être raccordée à la portion 23 du carter central 22.

Par ailleurs, l'extrémité arrière de chaque bielle 150a, 150b est de façon connue de l'homme du métier raccordée à une extrémité 148a, 148b d'un palonnier 146 prenant la forme d'une double ferrure, et étant articulé autour d'un premier axe d'articulation 144.

L'une des particularités de l'invention réside notamment dans le fait que ce premier axe d'articulation 144 est réalisé par l'intermédiaire de deux portions d'axe 144a, 144b, comme cela est le mieux visible sur les figures 5 et 6. Plus précisément, ce premier axe d'articulation 144 est donc constitué par une première portion d'axe 144a de forme semi-cylindrique et réalisée d'un seul tenant avec la première ferrure principale 132a, ainsi que par une seconde portion d'axe 144b également de forme semi-cylindrique, et réalisée d'un seul tenant avec la seconde ferrure principale 132b.

Ces deux portions d'axe 144a, 144b de forme semi-cylindrique disposent chacune d'une surface plane 162b en contact avec l'autre (la surface plane de la portion d'axe 144a n'étant pas visible sur les figures), ces surfaces planes 162b appartenant au plan de symétrie P.

En outre, les deux portions d'axe 144a, 144b forment le premier axe d'articulation de manière à ce que celui-ci soit orienté selon un axe 164 situé dans le plan de symétrie P.

L'assemblage comprenant les bielles 150a, 150b, le palonnier 146 et le premier axe d'articulation 144 constitue donc une partie de l'attache moteur avant 16 capable de reprendre les efforts s'exerçant selon la direction X du moteur 2, ces efforts étant essentiellement des efforts de poussée générés par ce dernier.

D'autre part, il est précisé que le premier axe d'articulation 144 se situe sur une partie arrière du corps principal 130. Au niveau de cette partie arrière, les première et seconde ferrures principales 132a, 132b définissent conjointement une surface de butée 166 agencée plus en avant par rapport à l'axe d'articulation 144, cette surface de butée 166 étant capable de limiter la rotation du palonnier 146 autour de l'axe d'articulation 144 en cas de rupture de l'une des deux bielles 150a, 150b ou d'un axe assurant l'articulation de ces dernières. De ce fait, il doit être compris que la surface 166 est positionnée par rapport à l'axe d'articulation 144 de manière à pouvoir constituer une butée pour le palonnier 146, lorsque celui-ci subit un débattement angulaire atteignant une valeur prédéterminée.

En outre, la partie avant du corps principal 130 est pourvue d'un agencement du type Monoball connu de l'homme du métier, comprenant un second axe d'articulation 136 solidaire du corps principal 130, ainsi qu'une ferrure triangulaire double 138 articulée au niveau d'un sommet sur cet axe 136. Toujours de façon connue, les deux autres sommets de cette ferrure triangulaire 138, situés plus bas que celui coopérant avec l'axe d'articulation 136, sont destinés à être raccordés de façon articulée sur la portion 23 du carter central 22.

Ce second axe d'articulation 136 est réalisé par l'intermédiaire de deux portions d'axe 136a, 136b, comme cela est le mieux visible sur les figures 5 et 6. Plus précisément, ce second axe d'articulation 136 est donc constitué par une première portion d'axe 136a de forme semi-cylindrique et réalisée d'un seul tenant avec la première ferrure principale 132a, ainsi que par une seconde portion d'axe 136b également de forme semi-cylindrique, et réalisée d'un seul tenant avec la seconde ferrure principale 132b.

Ces deux portions d'axe 136a, 136b de forme semi-cylindrique disposent chacune d'une surface plane 170b en contact avec l'autre (la surface plane de la portion d'axe 136a n'étant pas visible sur les figures), ces surfaces planes 170b appartenant au plan de symétrie P. En outre, les deux portions d'axe 136a, 136b forment le second axe d'articulation 134 de manière à ce que celui-ci soit orienté selon un axe 172 situé dans le plan de symétrie P.

L'assemblage comprenant le second axe d'articulation 136 et la ferrure triangulaire 138 constitue donc quant à lui une partie de l'attache moteur avant 16 capable de reprendre les efforts s'exerçant selon les directions Y et Z du moteur 2.

Enfin, il est indiqué que chacune des ferrures principales 132a, 132b peut être réalisée par usinage ou par moulage, dans un matériau du type acier ou titane.

Bien entendu, diverses modifications peuvent être apportées par l'homme du métier à l'attache moteur 16 et au système de montage 1 qui viennent d'être décrits, uniquement à titre d'exemples non limitatifs. En particulier, même si la description détaillée a uniquement fait référence à une attache avant pour l'application de l'invention, il est à comprendre que celle-ci s'applique également à la réalisation d'une attache arrière destinée à intégrer un palonnier de montage des bielles de reprise des efforts de poussée.

## Revendications

1. Ensemble moteur d'aéronef comprenant un moteur (2), un mât d'accrochage (6) du moteur (2), ainsi qu'un système de montage (1) interposé entre le moteur (2) et une structure rigide (4) du mât d'accrochage (6), ledit système de montage (1) comportant une attache moteur (16) comprenant un corps principal (130), un palonnier (146) monté de manière articulée sur ledit corps principal (130) par l'intermédiaire d'un premier axe d'articulation (144), ainsi que deux bielles de reprise des efforts de poussée (150a, 150b) disposant chacune d'une extrémité arrière raccordée sur ledit palonnier (146), le corps principal (130) étant réalisé par l'intermédiaire d'une première ferrure principale (132a) et d'une seconde ferrure principale (132b) superposée à la première, **caractérisé en ce que** le premier axe d'articulation (144) est constitué par une première portion d'axe (144a) et une seconde portion d'axe (144b), la première portion d'axe (144a) étant réalisée d'un seul tenant avec ladite première ferrure principale (132a) et la seconde portion d'axe (144b) étant réalisée d'un seul tenant avec ladite seconde ferrure principale (132b), et **en ce que** lesdites première et seconde ferrures principales (132a, 132b) définissent conjointement une surface (166) de butée pour le palonnier, capable de limiter la rotation du palonnier (146) autour dudit premier axe d'articulation (144).

2. Ensemble selon la revendication 1, **caractérisé en ce que** lesdites première et seconde portions d'axe (144a, 144b) constituant le premier axe d'articulation (144) sont chacune de forme semi-cylindrique.

3. Ensemble selon l'une quelconque des revendications précédentes, **caractérisé en ce que** lesdites première et seconde ferrures principales (132a, 132b) sont superposées selon une direction transversale (Y') de ladite attache moteur.

4. Ensemble selon l'une quelconque des revendications précédentes, **caractérisé en ce que** ladite attache (16) comporte en outre un second axe d'articulation (136) orienté selon une direction longitudinale (X') de ladite attache moteur.

5. Ensemble selon la revendication 4, **caractérisé en ce que** ledit second axe d'articulation (136) est constitué par une première portion d'axe (136a) et une seconde portion d'axe (136b), la première portion d'axe (136a) étant réalisée d'un seul tenant avec ladite première ferrure principale (132a) et la seconde portion d'axe (136b) étant réalisée d'un seul tenant avec ladite seconde ferrure principale (132b).

6. Ensemble selon la revendication 4 ou la revendication 5, **caractérisé en ce que** ladite attache (16) comporte une ferrure triangulaire (138) coopérant avec ledit second axe d'articulation (134).

7. Ensemble selon l'une quelconque des revendications précédentes, **caractérisé en ce que** lesdites première et seconde ferrures principales (132a, 132b) sont en contact selon une surface de jonction (160) appartenant à un plan de symétrie longitudinal (P) de ladite attache moteur.

8. Ensemble selon l'une quelconque des revendications précédentes, **caractérisé en ce que** ladite attache (16) constitue une attache avant du système de montage.

9. Ensemble selon l'une quelconque des revendications précédentes, **caractérisé en ce que** ladite attache est conçue de manière à pouvoir reprendre les efforts s'exerçant selon une direction (X) parallèle à un axe longitudinal (5) du moteur (2), selon une direction (Y) orientée transversalement par rapport au moteur (2), et selon une direction verticale (Z) de ce dernier, ces trois directions étant orthogonales entre-elles.

10. Ensemble selon l'une quelconque des revendications précédentes, **caractérisé en ce que** ledit système de montage (1) comprend ladite attache moteur (16) comme attache avant, ainsi qu'une attache moteur arrière (18).

## Claims

1. An aircraft engine assembly comprising an engine (2), a pylon (6) for attaching the engine (2), as well as a mounting system (1) interposed between the engine (2) and a rigid structure (4) of the attachment pylon (6), said mounting system (1) including an engine attachment (16) comprising a main body (130), a rudder control bar (146) jointedly mounted on said main body (130) via a first joint axis (144), as well as two connecting rods for spreading the thrust forces (150a, 150b) each having a rear end connected onto said rudder control bar (146), the main body (130) being made via a first main fitting (132a) and a second main fitting (132b) superposed to the first, **characterized in that** the first joint axis (144) is formed by a first axis portion (144a) and a second axis portion (144b), the first axis portion (144a) being made in a single piece with said first main fitting (132a) and the second axis portion (144b) being made in a single piece with said second main fitting (132b), and **in that** said first and second main fittings (1132a, 132b) jointly define an abutment surface (166) for the rudder control bar, capable of limiting the rotation of the rudder control bar (146) around said first joint axis (144).

2. The assembly according to claim 1, **characterized in that** said first and second axis portions (144a, 144b) forming the first joint axis (144) are each of semi-cylindrical shape.

3. The assembly according to any of the preceding claims, **characterized in that** said first and second main fittings (132a, 132b) are superposed along a transverse direction (Y') of said engine attachment.

4. The assembly according to any of the preceding claims, **characterized in that** said attachment (16) further includes a second joint axis (136) oriented along a longitudinal direction (X') of said engine attachment.

5. The assembly according to claim 4, **characterized in that** said second joint axis (136) is formed by a first axis portion (136a) and a second axis portion (136b), the first axis portion (136a) being made in a single piece with said first main fitting (132a) and the second axis portion (136b) being made in a single piece with said second main fitting (132b).

6. The assembly according to claim 4 or claim 5, **characterized in that** said attachment (16) includes a triangular fitting (138) which cooperates with said second joint axis (134).

7. The assembly according to any of the preceding claims, **characterized in that** said first and second main fittings (132a, 132b) are in contact along a junction surface (160) belonging to a longitudinal planer of symmetry (P) of said engine attachment.

8. The assembly according to any of the preceding claims, **characterized in that** said attachment (16) forms a front attachment of the mounting system.

9. The assembly according to any of the preceding claims, **characterized in that** said attachment is designed so as to be able to take the strains exerted along a direction (X) parallel to a longitudinal axis (5) of the engine (2), along a direction (Y) oriented transversely relative to the engine (2), and along a vertical direction (Z) of the latter, these three directions being orthogonal to each other.

10. The assembly according to any of the preceding claims, **characterized in that** said mounting system (1) comprises said engine attachment (16) as a front attachment, as well as a rear engine attachment (18).

## Patentansprüche

1. Triebwerkanordnung für ein Luftfahrzeug, umfassend ein Triebwerk (2), ein Aufhängungssystem (6) des Triebwerks (2) sowie ein Montagesystem (1), das zwischen das Triebwerk (2) und eine starre Struktur (4) des Aufhängungssystems (6) eingefügt ist, wobei das Montagesystem (1) eine Triebwerkbefestigung (16) aufweist, die einen Hauptkörper (130), eine Traverse (146), die an dem Hauptkörper (130) über eine erste Schwenkachse (144) beweglich angebracht ist, sowie zwei Pleuelstangen (150a, 150b) zur Aufnahme von Schubkräften, die jeweils mit einem hinteren Ende an der Traverse (146) angebracht sind, umfasst, wobei der Hauptkörper (130) mittels eines ersten Hauptbeschlags (132a) und eines zweiten Hauptbeschlags (132b), der dem ersten überlagert ist, ausgeführt ist,
**dadurch gekennzeichnet,**
**dass** die erste Schwenkachse (144) durch einen ersten Achsenteil (144a) und einen zweiten Achsenteil (144b) gebildet wird, wobei der erste Achsenteil (144a) einstückig mit dem ersten Hauptbeschlag (132a) ausgeführt ist und der zweite Achsenteil (144b) einstückig mit dem zweiten Hauptbeschlag (132b) ausgeführt ist, und dass der erste und der zweit Hauptbeschlag (132a, 132b) gemeinsam eine Anschlagfläche (166) für die Traverse festlegen, wodurch die Drehung der Traverse (146) um diese erste Schwenkachse (144) beschränkt werden kann.

2. Anordnung nach Anspruch 1, **dadurch gekennzeichnet, dass**, der erste und der zweite Achsenteil (144a, 144b), die die erste Schwenkachse (144) bilden, jeweils von halbzylindrischer Form sind.

3. Anordnung nach einem der vorhergehenden Ansprüche, **dadurch gekennzeichnet, dass** der erste und der zweite Hauptbeschlag (132a, 132b) längs einer Querrichtung (Y') der Triebwerkbefestigung einander überlagert sind.

4. Anordnung nach einem der vorhergehenden Ansprüche, **dadurch gekennzeichnet, dass** die Befestigung (16) ferner eine zweite Schwenkachse (136) umfasst, die in einer Längsrichtung (X') der Triebwerkbefestigung ausgerichtet ist.

5. Anordnung nach Anspruch 4, **dadurch gekennzeichnet, dass** die zweite Schwenkachse (136) durch einen ersten Achsenteil (136a) und einen zweiten Achsenteil (136b) gebildet wird, wobei der erste Achsenteil (136a) einstückig mit dem ersten Hauptbeschlag (132a) ausgeführt ist und der zweite Achsenteil (136b) einstückig mit dem zweiten Hauptbeschlag (132b) ausgeführt ist.

6. Anordnung nach Anspruch 4 oder Anspruch 5, **dadurch gekennzeichnet, dass** die Befestigung (16) einen dreieckigen Beschlag (138) aufweist, der mit der zweiten Schwenkachse (134) zusammenwirkt.

7. Anordnung nach einem der vorhergehenden Ansprüche, **dadurch gekennzeichnet, dass** der erste und der zweite Hauptbeschlag (132a, 132b) längs einer Verbindungsfläche (160), die zu einer longitudinalen Symmetrieebene (P) der Triebwerkbefestigung gehört, in Kontakt sind.

8. Anordnung nach einem der vorhergehenden Ansprüche, **dadurch gekennzeichnet, dass** die Befestigung (16) eine vordere Befestigung des Montagesystems bildet.

9. Anordnung nach einem der vorhergehenden Ansprüche, **dadurch gekennzeichnet, dass** die Befestigung derart gestaltet ist, dass sie die Kräfte aufnehmen kann, die in einer zu einer Längsachse (5) des Triebwerks (2) parallelen Richtung (X), in einer in Bezug auf das Triebwerk (2) querverlaufenden Richtung (Y) und in einer zur letzteren vertikalen Richtung (Z), wobei diese drei Richtungen zueinander orthogonal sind, auftreten.

10. Anordnung nach einem der vorhergehenden Ansprüche, **dadurch gekennzeichnet, dass** das Montagesystem (1) diese Triebwerkbefestigung (16) als vordere Befestigung sowie eine hintere Triebwerkbefestigung (18) umfasst.
